# EUROPÄISCHE PATENTSCHRIFT

(11) **EP 1 054 182 B1**
(45) Veröffentlichungstag und Bekanntmachung des Hinweises auf die Patenterteilung: **02.01.2008**
(21) Anmeldenummer: 00106333.8
(22) Anmeldetag: 23.03.2000
(51) Int. Cl.: F16F 7/12, B60R 19/36

(54) **Vorrichtung zum Aufnehmen von Stossenergie**
Device for the absorption of shock energy
Dispositif pour l'absorption d'énergie de choc

(30) Priorität: 18.05.1999 DE 19922779
(43) Veröffentlichungstag der Anmeldung: 22.11.2000
(73) Patentinhaber: Euromotive GmbH & Co. KG, 5651 Lend (AT)
(72) Erfinder: Garnweidner, Peter, 5112 Lamprechtshausen 429a (AT); Danninger, Christian, 5204 Strasswalchen (AT)
(74) Vertreter: Wilhelms . Kilian & Partner Patentanwälte

(56) Entgegenhaltungen:
- WO-A-97/19834
- DE-A- 19 616 944
- DE-A- 19 832 114
- US-A- 4 031 978
- US-A- 5 181 589

## Beschreibung

Die Erfindung betrifft eine Vorrichtung zum Aufnehmen von Stoßenergie nach dem Gattungsbegriff des Patentanspruchs.

Eine derartige Vorrichtung, die aus der DE-A-196 16 944 bekannt ist, soll insbesondere bei Kraftfahrzeugen den Fahrzeugrahmen und die Karosserie vor einem Schaden durch die bei einem Stoß auftretenden Stoßenergie schützen.

In Abhängigkeit von der Aufprallgeschwindigkeit eines Fahrzeuges bei einem Stoß soll die Vorrichtung in drei grundsätzlichen Stufen arbeiten, nämlich:
1. Bei niedrigen Geschwindigkeiten erfolgt eine elastische Energieaufnahme, so daß nach einer entsprechenden Kollision das Fahrzeug ohne Schäden weiter fahrbereit ist. Je nach Richtlinien und gesetzlichen Regelungen ist diese elastische Energieaufnahme bei Geschwindigkeiten zwischen 4 und maximal 8 km/h vorgesehen. 2. Bei mittleren Geschwindigkeiten bis zu 15 km/h soll der Längsträger geschützt werden, um den Reparaturschaden in Grenzen zu halten. In diesem Geschwindigkeitsbereich bleibt der Längsträger unbeschädigt und erfolgt die Energieaufnahme durch eine plastische Verformung.
3. Bei hohen Geschwindigkeiten soll nach der plastischen Energieaufnahme ein Faltenbeulen der Längsträger auftreten, wobei diese insbesondere vorne am Fahrzeug in ihrer Position zu halten sind, um ein einseitiges Verbiegen zu verhindern.

Es ist bekannt, bei Ausbildungen aus Stahl ein Hydraulikteil zur elastischen Energieaufnahme im Inneren eines Verformungsrohres zur plastischen Einergieaufnahme anzuordnen. Da zum Erreichen der notwendigen Verformungskräfte das Verformungsrohr einen kleinen Durchmesser haben muß, muß auch das Hydraulikteil dann, wenn es im Verformungsrohr angeordnet wird, kleine Abmessungen haben, so daß mit sehr hohen Drücken gearbeitet werden muß.

Während bei der Ausführung aus Stahl eine derartige Ausbildung möglich ist, da Stahllegierungen mit einer Streckgrenze von ca. 1000 MPa in Verbindung mit Wandstärken von 6 mm eingesetzt werden können, ist bei einer Aluminiumausführung diese Anordnung unmöglich, da die zulässigen Spannungen naturgemäß niedriger als bei Stahl sind. Daraus ergibt sich, daß bei einer Ausführung in Aluminium der Hydraulikteil nicht im Inneren des Verformungsrohres sondern außerhalb angeordnet sein muß.

Eine Anordnung im Bereich zwischen dem Bauelement, an dem ein Stoß liegt, d.h., insbesondere zwischen dem Stoßfängerträger und dem Bauelement, das vor dem Stoß zu schützen ist, d.h., insbesondere dem Längsträger ist allerdings nicht möglich, da bei einer derartigen Ausbildung große Blocklängen erzeugt werden, die für die optimale Ausnutzung des Verformungsweges der Stufe 2 der plastischen Energieaufnahme hinderlich sind. Dabei ist unter der Blocklänge die verbleibende Bauteillänge eines Energieaufnahmeelementes zu verstehen, bei der das zulässige Kraftniveau für die Nutzung des Verformungsweges überschritten ist. Im Extremfall wirkt das Energieaufnahmeelement dann starr.

Die der Erfindung zugrunde liegende Aufgabe besteht daher darin, die Vorrichtung der eingangs genannten Art so auszubilden, daß sie ohne Erzeugung großer Blocklängen in Aluminium ausgeführt werden kann.

Die Aufgabe wird gemäß der Erfindung durch die im Patentanspruch angegebene Ausbildung gelöst.

Durch diese Ausbildung besteht z.B. die Möglichkeit, einen Hydraulikteil mit großen Kolbendurchmessern einzusetzen, der mit niedrigeren Öldrucken arbeitet, wobei auch die erforderlichen zulässigen Spannungen und Wanddicken der Öl- und Gaszylinder des Hydraulikelementes geringer sind.

Im folgenden wird anhand der zugehörigen Zeichnung ein besonders bevorzugtes Ausführungsbeispiel der Erfindung näher beschrieben. Es zeigen

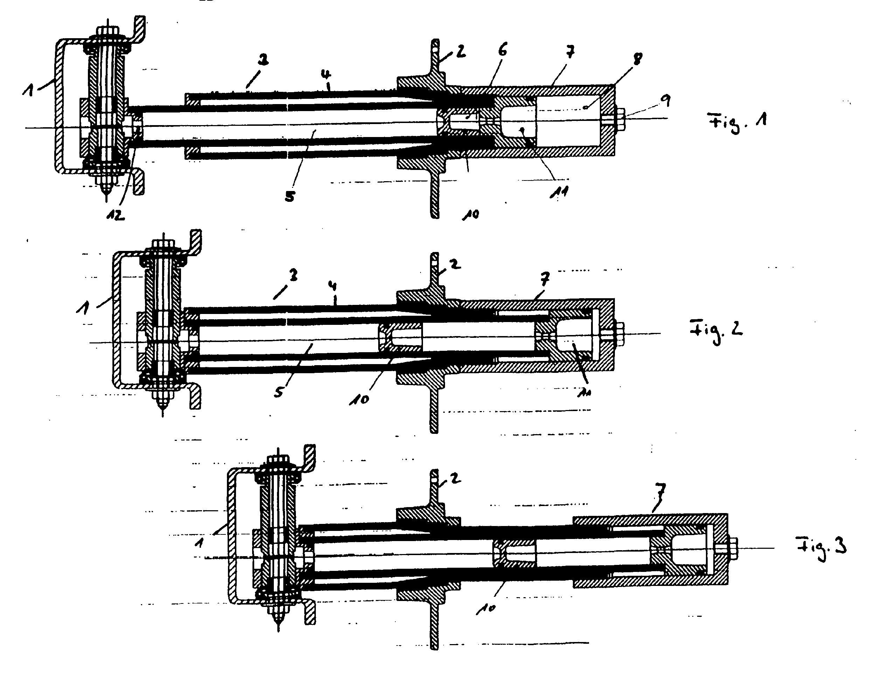

Fig. 1 bis 3 in Längsschnittansichten das Ausführungsbeispiel der erfindungsgemäßen Vorrichtung in drei verschiedenen Arbeitsphasen.

Die in der Zeichnung dargestellte Vorrichtung zum Aufnehmen von Stoßenergie zwischen einem Stoßfängerträger 1 und einem Längsträger des Rahmens eines Kraftfahrzeuges besteht aus einem Verformungsteil 3, das ein Verformungsrohr 4 umfaßt, das in einem Reduzierrohr 2 angeordnet ist, das mit dem Längsträger des Rahmens des Kraftfahrzeuges verbunden ist. Ein derartiger Verformungsteil 3 ist beispielsweise aus der AT 402 186 B bekannt.

Im Verformungsrohr 4 ist ein Gasrohr 5 angeordnet, das einen Gasinnenraum umschließt, der über ein Befüllungsventil 12 mit Gas befüllt werden kann. Hinter dem Gasrohr 5 und zwar im Bereich hinter dem Reduzierrohr 2, d.h., im Längsträger des Kraftfahrzeuges befindet sich ein Hydraulikteil zur elastischen Stoßenergieaufnahme, der ähnlich wie ein Stoßdämpfer aufgebaut ist und im wesentlichen aus einem Gaskolben 10 und einem Ölkolben 11 mit Drosselventil zum Gaskolben 10 besteht, die in einem Ölzylinder 7 angeordnet sind, der fest außen auf dem Verformungsrohr 4 sitzt. Im Ölzylinder ist eine Ölkammer 8 gebildet, die über eine Verschlußschraube 9 zugänglich ist. Im Gaskolben 10 ist eine zweite Ölkammer 6 gebildet.

Vorzugsweise ist der Ölzylinder 7 mit dem Verformungsrohr 4 verschraubt, wodurch die feste Verbindung zwischen diesen Bauteilen hergestellt ist.

Zum Füllen der Anordnung wird der Gaskolben 10 in einem Abstand von beispielsweise 2 mm vom Ölkolben 11 angeordnet, wird anschließend Öl über die mit der Verschlußschraube 9 verschließbar Öffnung eingefüllt und wir anschließend die Verschlußschraube 9 dicht aufgesetzt. Danach wird über das Ventil 12 der Gasbereich auf einige bar Überdruck gefüllt, so daß über den Spalt zwischen dem Ölkolben 11 und dem Gaskolben 10 die gesamte Anordnung unter einem Überdruck steht.

Im folgenden wird anhand der Fig. 1 bis 3 das Funktionsprinzip der Vorrichtung beschrieben.

In der ersten Stufe, d.h., bei einer Aufprallgeschwindigkeit von 4 bis 8 km/h wird ausgehend von der Anordnung in Fig. 1 über den Stoßfänger 1 eine Kraft eingeleitet, die über das Gasrohr 5, d.h., den Gaszylinder an den Ölkolben 11 weitergegeben wird. Das Öl wird von der ersten Ölkammer 8 im Ölzylinder 7 dann über das im Ölkolben 11 vorgesehene Drosselventil in die zweite Ölkammer 6 im Gaskolben 10 gepresst. Dadurch wird der Gaskolben 10 verschoben und das Gas im Gasraum des Gasrohres 5 weiter mit Druck beaufschlagt. In dieser Weise wird die Stoßenergie zunächst vom Hydraulikteil im Ölzylinder 7 und anschließend vom Gasteil, d.h., im wesentlichen von der Gasfüllung im Gasrohr 5 abgebaut. Die Anordnung der Vorrichtung nach der elastischen Energieaufnahme durch den Hydraulikteil ist in Fig. 2 dargestellt.

Bei den oben angegebenen niedrigen Geschwindigkeiten tritt keine plastische Energieaufnahme auf.

Bei höheren Geschwindigkeiten der zweiten Stufe spricht umgekehrt zunächst der Hydraulikteil nicht an, so daß am Anfang der Stoßenergieübertragung keine elastische Energieaufnahme erfolgt. Das beruht darauf, daß die bei höheren Kollisionsgeschwindigkeiten auftretende Stoßkraft die Verformungskraft des Verformungsrohres 4 übersteigt, da das durch das Drosselventil im Ölkolben 11 zu verdrängende Volumen zu groß ist und daher der Hydraulikteil wie ein starres Element wirkt.

Die Energie bei hohen Kollisionsgeschwindigkeiten wird daher zunächst durch eine Verformung des Verformungsrohres 4 abgebaut, wie es in Fig. 3 dargestellt ist, bei der den Verformungsrohr 4 durch das Reduzierrohr 2 gepreßt wird und dadurch auf einen kleinen Außendurchmesser zusammengedrückt wird, und zwar solange, bis die Stoßkraft soweit abgefallen ist, daß der Hydraulikteil reagieren kann. Am Ende der Energieaufnahme erfolgt daher eine elastische Energieaufnahme durch Einfedern des Hydraulikteils. Der Endzustand ist in Fig. 3 dargestellt.

Durch die kraftmäßige Kopplung der ersten und der zweiten Stufe ist ein Überschreiten der zulässigen Längskraft des Längsträgers in dem jeweiligen Geschwindigkeitsbereich ausgeschlossen.

## Patentansprüche

1. Vorrichtung zum Aufnehmen von Stoßenergie zwischen einem Bauteil, an dem ein Stoß liegt und einem vor den Wirkungen der Stoßenergie zu schützenden Bauteil, insbesondere zwischen dem Stoßfängerträger und dem Längsträger des Rahmens eines Kraftfahrzeuges mit einem Aufnahmeteil (3) zur plastischen Energieaufnahme und einem Aufnahmeteil zur elastischen Energieaufnahme,
wobei der Aufnahmeteil (3) zur plastischen Energieaufnahme aus einem Verformungsrohr (4) und einem Reduzierrohr (2) besteht, das so angeordnet ist, dass es mit dem vor den Wirkungen der Stoßenergie zu schützenden Bauteil verbunden werden kann, und durch das das Verformungsrohr (4) bei einem Stoß gedrückt wird, **dadurch gekennzeichnet, dass**
- der Aufnahmeteil zur elastischen Energieaufnahme aus einem Gasrohr (5), das im Verformungsrohr (4) angeordnet ist, und einem Hydraulikteil (7, 10, 11) aufgebaut ist, der wie ein Stoßdämpfer ausgebildet und auf der dem Gasrohr (5) abgewandten Seite des Reduzierrohres (2) angeordnet ist, wobei
- das Verformungsrohr (4) fest mit dem Hydraulikteil (7, 10, 11) verbunden ist, derart, dass
- bei einem Stoß mit niedriger Energie die Stoßenergie vom Gasrohr (5) auf den Hydraulikteil (7, 10, 11) übertragen wird und durch Beaufschlagung der Gasfüllung im Gasrohr (5) durch den Hydraulikteil (7, 10, 11) elastisch aufgenommen wird, während bei einem Stoß mit hoher Energie die Stoßenergie zunächst vom Verformungsrohr (4) durch dessen Verformung im Reduzierrohr (2) plastisch abgebaut wird und anschließend über den Hydraulikteil (7, 10, 11) und das Gasrohr (5) elastisch aufgenommen wird.

## Claims

1. Device for the absorption of shock energy between a component at which a shock is located and a component which is to be protected against the effects of the shock energy, in particular between the bumper bracket and the longitudinal member of the chassis of a motor vehicle, with an absorbing part (3) for plastic energy absorption and an absorbing part for resilient energy absorption,
wherein the absorbing part (3) for plastic energy absorption consists of a deformation tube (4) and a reducing tube (2) which is disposed such that it can be connected to the component to be protected against the effects of the shock energy and through which the deformation tube (4) is forced in the event of a shock, **characterised in that**
- the absorbing part for resilient energy absorption is composed of a gas tube (5), which is arranged in the deformation tube (4), and a hydraulic part (7, 10, 11), which is formed like a shock absorber and is arranged on the side of the reducing tube (2) which is remote from the gas tube (5), wherein
- the deformation tube (4) is firmly connected to the hydraulic part (7, 10, 11) such that
- in the event of a shock with low energy the shock energy is transmitted from the gas tube (5) to the hydraulic part (7, 10, 11) and resiliently absorbed by the hydraulic part (7, 10, 11) through the action of the gas filling in the gas tube (5), whereas in the event of a shock with high energy the shock energy is firstly plastically reduced by the deformation tube (4) through the deformation of the latter in the reducing tube (2) and then resiliently absorbed by way of the hydraulic part (7, 10, 11) and the gas tube (5).

## Revendications

1. Dispositif absorbeur d'énergie de choc monté entre un composant sur lequel agit un choc, et un composant à protéger des effets de l'énergie de choc, en particulier entre le pare-chocs et le longeron du châssis d'un véhicule automobile, comprenant un élément absorbeur (3) conçu pour une absorption d'énergie par déformation plastique et un élément absorbeur conçu pour une absorption élastique de l'énergie,
l'élément absorbeur (3) conçu pour absorber de l'énergie par déformation plastique étant constitué d'un tube de déformation (4) et d'un tube réducteur (2), qui est disposé de manière telle qu'il puisse être relié au composant à préserver des effets de l'énergie de choc, et qui déforme le tube de déformation (4) en cas de choc,
**caractérisé en ce que**
- l'élément absorbeur conçu pour une absorption élastique d'énergie est composé d'un tube à gaz (5), qui est disposé à l'intérieur du tube de déformation (4), et d'une partie hydraulique (7, 10, 11), qui est configurée comme un amortisseur de choc et est disposée du côté du tube réducteur (2), qui est éloigné du tube à gaz (5),
- le tube de déformation (4) étant relié de façon fixe à la partie hydraulique (7, 10, 11), de manière telle que
- en cas de choc de faible énergie, l'énergie du choc soit transmise du tube à gaz (5) à la partie hydraulique (7, 10, 11), et soit élastiquement absorbée en étant appliquée au remplissage de gaz du tube à gaz (5) par l'intermédiaire de la partie hydraulique (7, 10, 11), alors qu'en cas de choc de haute énergie, l'énergie du choc soit d'abord diminuée par déformation plastique grâce à la déformation plastique du tube de déformation (4) à l'intérieur du tube réducteur (2), et soit ensuite élastiquement absorbée par l'intermédiaire de la partie hydraulique (7, 10, 11) et le tube à gaz (5).
